# EUROPEAN PATENT SPECIFICATION

(11) **EP 2 307 781 B1**
(45) Date of publication and mention of the grant of the patent: **17.09.2014**
(21) Application number: 09794726.1
(22) Date of filing: 24.06.2009
(51) Int. Cl.: F16L 27/08, E03C 1/12

(54) **A PIVOTAL FITTING FOR INDOOR SEWER SYSTEMS**
DREHVERBINDUNGSSTÜCK FÜR KANALISATIONSSYSTEME IN GEBÄUDEN
RACCORD PIVOTANT POUR SYSTÈMES D'ÉGOUTS INTÉRIEURS

(30) Priority: 09.07.2008 SE 0801647
(43) Date of publication of application: 13.04.2011
(73) Proprietor: Claesson, Tommy, 507 71 Gånghester (SE)
(72) Inventor: Claesson, Tommy, 507 71 Gånghester (SE)
(74) Representative: Johansson, Lars E.
(86) International application number: PCT/SE2009/050798
(87) International publication number: WO 2010/005372

(56) References cited:
- EP-A1- 1 031 312
- EP-A1- 1 925 756
- DE-A1- 4 338 662
- DE-U1- 8 704 386
- FR-A- 603 187
- JP-U- S5 199 067
- US-A- 4 811 431

## Description

### TECHNICAL FIELD

The present invention relates to a pivotal fitting for indoor sewer systems to interconnect at least two pipe sections or tubing sections, said fitting comprising a first tubular portion and a second tubular portion, which is pivotally attached to said first portion, and one of said portions having a wall defining a socket in the shape of an internally spherical zone, and the other one of said portions of the second tube member having an end in the shape of a mating externally spherical zone.

The term "tube" or "tubing" is used to designate a pipe section or hollow cylinder for the conveyance of fluids (liquids or gases) and sometimes other materials. Although in some cases minor distinctions may exist between the terms "tube" and "pipe", in the present context they are interchangeable.

The term "spherical zone" is used to designate the curved surface that is formed between two parallel planes that cut a sphere.

### BACKGROUND ART

Branched fittings available from ordinary sanitation equipment stores have various branch angles, 22.5°, 45°, 67.5° or 90°, for example. Similar angles are used for elbows. This means that a craftsman fixing a sewer usually has to bring along several different fittings in order to be able to carry out his work, and even though it may be possible to for him to choose between fittings that have different branch angles, the available fittings sometimes do not fit in a particular installation for shortage of space.

Solutions to this problem are disclosed in GB 953179 and DE-U-8704386. Pipes of thermoplastic material such as polyvinyl chloride, polystyrene, a polyamide or polyethylene, have hollow, part-spherical extensions. The radial dimensions of one extension are greater than those of the other extension, and the free ends of the extensions projects axially beyond the center of the part-spherical extensions. One of the pipes is formed as a branch of a main pipe. The two part-spherical ends of the pipe members are forced one into the other by impact, which is stated to prevent the parts from breaking, cracking or bursting, because the necessary extension of the entrance opening of the outer part-spherical extension is of short duration. It is also stated that a fluid-tight connection is produced, which cannot be released or is difficult to release, and nevertheless, the pipe members can be pivotally moved relatively to one another.

However, since the entrance opening of the outer part-spherical extension is smaller than the internal diameter at the center of the part-spherical extension, the part-spherical extension is difficult to cast, because it requires an internal mold that can be destroyed. In addition, it takes a considerable impact to force the inner part-spherical extension into the outer one or the outer one to completely enter over the inner one.

A pivotal fitting according to the preamble of claim 1 is known from FR 603 187.

### DISCLOSURE OF THE INVENTION

The object of the present invention is to provide a pivotal branched fitting, which can be manufactured by casting without requiring the destruction of an internal mold, and which is easy to assemble and can withstand the intended internal fluid pressure.

In a fitting of the kind referred to this object is achieved in accordance with the present invention by the features defined by claim 1.

Thanks to the open, cup-shaped design of the internally spherical zone, there is no need for destructing an inner mold after casting of the component, the fitting is easy to assemble and the stub shafts and the clamping means prevent the assembled fitting from getting pressed apart by internal fluid pressure.

For making the fitting leak-proof, the socket has a rim with a seat for an internal seal ring for sealing against the externally spherical zone, the clamping means include a ring, preferably snap action, circumferentially interconnecting the first portion and the second portion, and a seal ring is provided in said seat for preventing leakage of fluid through the hinge joint, said snap action ring compressing said seal ring axially.

The stub shafts and corresponding recess are shaped in a mating manner to allow pivotal movement.

Preferably, the stub shafts have a cylindrically curved first surface, and the snap action ring has two correspondingly curved recesses for receiving said cylindrically curved first surfaces. Further, said stub shafts also have an opposed surface, and the snap action ring presses the opposed surface of the stub shafts against an axial side of the seal ring. This effectively contributes to the holding together of the components of the fitting.

It is preferred that the hinge joint is configured to permit a pivotal movement on the order of 45°. Thereby, the fitting of the invention can be substituted for a plurality of fixed angle fittings. Then it is suitable that the second portion is pivotal an angle on the order of ± one sixteenth of a full rotation from a longitudinal axis of the spherical zone of the first portion.

In one preferred embodiment, the spherical zone of the first portion is arranged at an angle to a longitudinal axis of the first portion, said angle being selected from the group consisting of 0°, 20°-22.5°, 45°, 67.5°-70° and 87.5°-90°. Thereby, a few pivotal fittings can be substituted for a greater number of straight or fixed angle elbow fittings.

In another preferred embodiment, the first portion forms a beginning of an integral branch of a branched fitting having at least two branches for interconnecting at least three pipe sections or tubing sections. Hereby, the teachings of the present invention are expanded to branched fittings, such as tee, wye or cross fittings.

Preferably, the branched fitting comprises a first tube member and a second tube member, said first and second tubular portions together forming the second tube member.

To agree with available fixed angle fittings, it is also recommendable that the longitudinal axis of the first portion forms an angle with a longitudinal axis of an other branch of said branched fitting, said angle being selected from the group consisting of 20°-22.5°, 45°, 67.5°-70° and 87.5°-90°.

To make the fitting as space-saving as possible for applications in cramped spaces, a distance between the third tube member and the wall defining the socket suitably is as short as possible.

Preferably, the fitting is an all-plastic fitting made of any suitable plastic, such as polyvinyl chloride, polystyrene, a polyamide or polyethylene.

### BRIEF DESCRIPTION OF THE DRAWINGS

In the following, the invention will be described in more detail with reference to preferred embodiments and the appended drawings.
- Fig. 1: is a perspective view of one embodiment of a pivotal branched fitting having a ball and socket joint in accordance with a first preferred embodiment of the present invention.
- Fig. 2: is a side view of the fitting of Fig. 1.
- Fig. 3: is a vertical cross-sectional view of the fitting taken along line III-III in Fig. 2.
- Fig. 4: is a cross sectional view similar to part of Fig.3 but showing the ball and socket joint on a larger scale and with some hidden contours added in dashed lines.
- Fig. 5: is an exploded perspective view of another embodiment of a pivotal fitting having a ball and socket joint in accordance with a second preferred embodiment of the present invention.
- Fig. 6: is a perspective view of the pivotal fitting of Fig. 5 after assembly.

### MODE(S) FOR CARRYING OUT THE INVENTION

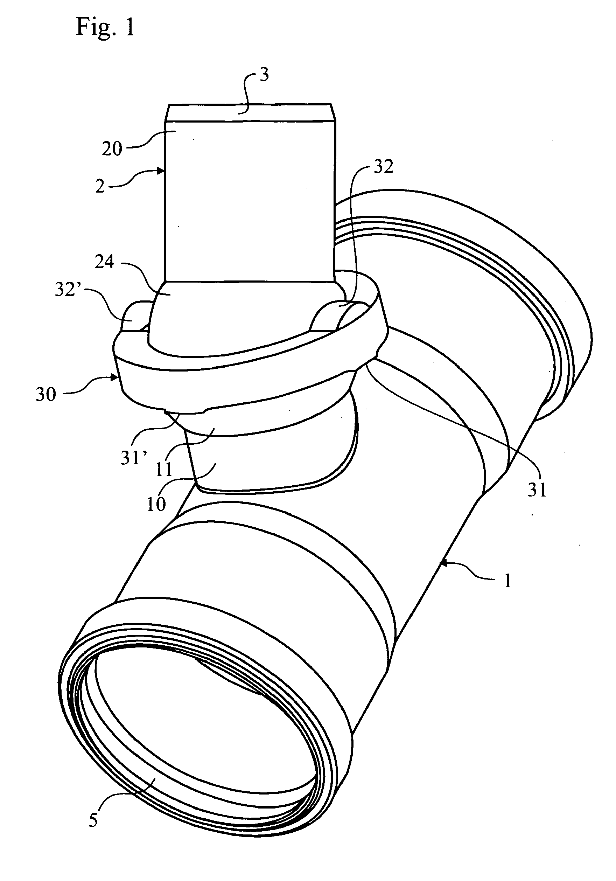

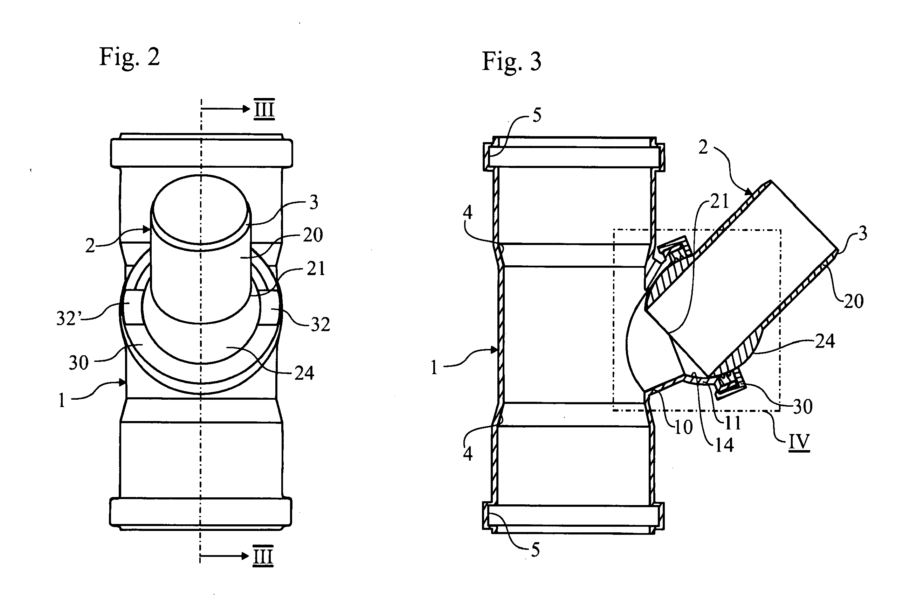

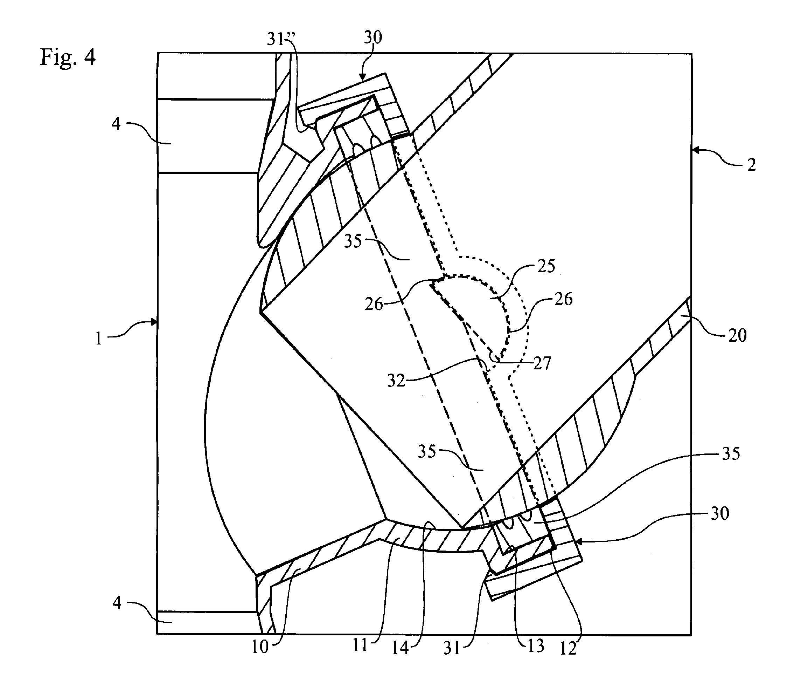

The pivotal branched fitting shown in Fig. 1 is intended for interconnecting at least three straight or curved pipe sections or tubing sections in indoor sewer systems and can be described as a tee fitting or a wye fitting. However, the teachings of the present invention can be applied also to other branched fittings, e.g. cross fittings. The branched fitting comprises a first tube member 1 and a second tube member 2 branching off from the first tube member 1. The second tube member 2 has a first tubular portion 10, which is integral with the first tube member 1, and a second tubular portion 20, which is pivotally attached to the first portion 10. As is best shown in Figs. 3 and 4, one of the portions 10, 20 of the second tube member 2, in the drawings the first portion 10, has a wall 11 defining a socket in the shape of an internally spherical zone 14, and the other one of said portions, in the drawings the second portion 20, has an end 21 in the shape of a mating externally spherical zone 24. Even though in the drawings, the internally spherical zone 14 is shown as provided on the first portion 10, and the externally spherical zone 24 is shown as provided on the second portion 20 of the second tube member, it is quite possible, if desired, to make it the other way round.

In accordance with the present invention, the internally spherical zone 14 provided in one of the portions of the second tube member 2 is cup-shaped and diverges toward an opening, which faces the externally spherical zone 24 of the other portion of the second tube member 2 to permit entry of the externally spherical zone 24 of said other portion into surface contact between the two zones 14, 24. Further, the externally spherical zone 24 of said end has two diametrically opposed stub shafts 25 integrally arranged on the surface of the spherical zone to form a hinge axis for the second portion 20 of the second tube member 2 in a hinge joint, and clamping means 30 are provided for maintaining the two spherical zones 14, 24 clamped against each other. Thanks to the open, cup-shaped design of the internally spherical zone 14, there is no need for destructing an inner mold after casting of the component, the fitting is easy to assemble, and the stub shafts 25 and the clamping means 30 prevent the assembled fitting from getting pressed apart by internal fluid pressure.

In the embodiment shown in the drawings, both ends of the first tube member 1 are designed for insertion of a pipe, not shown, having a beveled end, which is intended to abut against a mating beveled surface 4, 4' provided inside the first tube member 1. At both ends, the first tube member 1 is provided with a circumferential internal groove 5, 5' for housing a seal ring, not shown, for sealing against the exterior surface of the pipe inserted in the first tube member 1 of the fitting. Further, the second tube member 2 is shown as being of a smaller diameter then the first tube member 1, and it has a beveled free end 3 for connection to some other component, not shown, in an indoor sewer system. Of course, if desired, the fitting may be designed for other types of connection to other components of the sewer system, e.g. threaded connections or connections to be welded or glued, and the size of the inlets and/or outlets of the fitting may all be alike or differ from one another.

For making the fitting leak-proof, the socket 11 suitably has a rim 12 with a seat 13 for an internal seal ring for sealing against the externally spherical zone 24. In the shown embodiment, the seat 13 is defined by an annular bottom wall and an outer cylindrical wall, but it can be of any desired shape. The clamping means include a snap action ring 30, which interconnects the first portion 10 and the second portion 20 of the second tube member 2 circumferentially. In the shown embodiment, the snap action ring 30 has four radially inwards projecting equiangularly spaced hook members 31, three of which (31, 31', and 31 ") are shown in the drawings, for gripping against the reverse side of the rim 12. Of course, if desired, another number of hook members may be chosen. An elastic seal ring 35 is provided in said seat 13 for preventing leakage of fluid through the hinge joint, and the snap action ring 30 compresses said seal ring 35 axially.

As is best shown in Fig. 4, each stub shaft 25 has a cylindrically curved first surface 26, and the snap action ring 30 has two correspondingly curved recesses 32, 32' for receiving the cylindrically curved first surface 26 of each stub shaft 25, and two of the hook members 31 preferably are placed opposite the recesses 32. Further, each stub shaft 25 also has an opposed surface 27, and the snap action ring 30 presses the opposed surface 27 of each of the stub shafts 25 against an axial side of the elastic seal ring 35. In the embodiment shown in Fig. 4, the opposed surface 27 is plane but, if desired, it might as well be rounded or formed by two or more intersecting planes. The combination of the stub shafts, the snap action ring and the elastic seal effectively contributes to the holding together of the components of the fitting. The stub shafts 25 make the universal pivotal joint into a hinge joint and, consequently, restrict the pivotal movement of the second portion 20 of the second tube member to a single plane. However, by rotating the snap action ring 30 and the externally spherical zone 24 with its two stub shafts 25, it is possible to select any desired position for the pivotal movement plane.

Figs. 3 and 4 clearly show that in order to make the fitting as space-saving as possible for applications in cramped spaces, a distance between the first tube member 1 and the rim 12 of the socket 11 suitably is as short as possible. The gap should be of sufficient size to accommodate one of the hook members 31 of the snap action ring 30.

It is preferred that the hinge joint is configured to permit a pivotal movement in the range of 35-55 degrees, and preferably on the order of 45°. Thereby, the fitting of the invention can be substituted for a plurality of fixed angle fittings. Then it is suitable that the second portion 20 of the second tube member 2 is pivotal an angle on the order of ± one sixteenth of a full revolution from a longitudinal axis of the first portion 10 of the second tube member 2.

To agree with marketed fixed angle fittings, it is also recommendable that the longitudinal axis of the first portion 10 of the second tube member 2 forms an angle with a longitudinal axis of the first tube member 1 selected from the group consisting of 20°-22.5°, 45°, 67.5°-70° and 87.5°-90°.

If desired, the fitting may be made of metal but, preferably, the fitting is an all-plastic fitting made of any suitable plastic, usually a thermoplastic resin such as polyvinyl chloride, polystyrene, a polyamide or polyethylene.

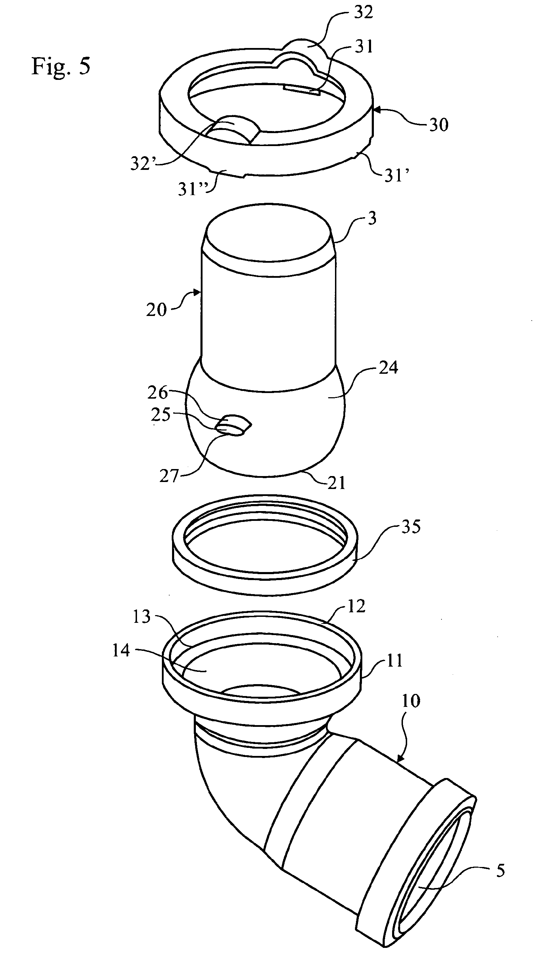

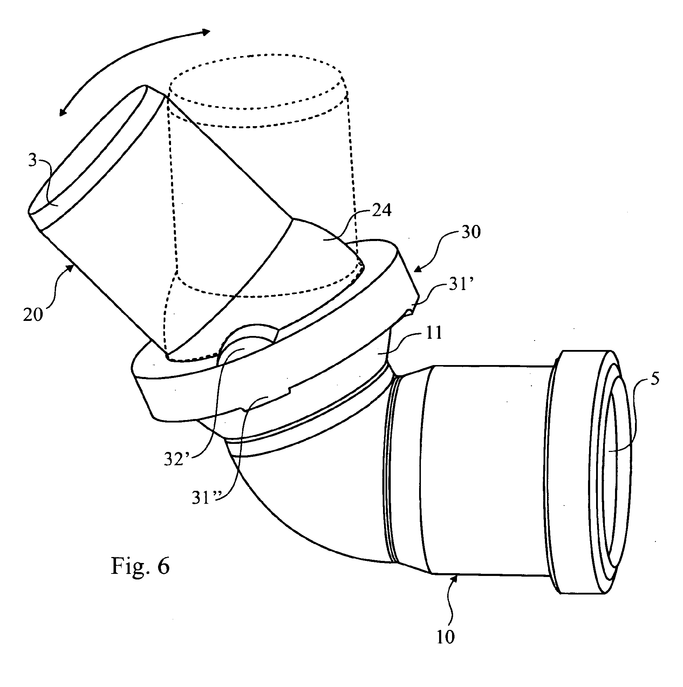

The pivotal fitting shown in Figs. 5 and 6 is intended for interconnecting two straight or curved pipe sections or tubing sections in indoor sewer systems. As in the branched fitting described above, the pivotal fitting has a first tubular portion 10, and a second tubular portion 20 that is pivotally attached to the first portion 10. One of the portions 10 and 20, in the drawings the first portion 10, has a wall 11 defining a socket in the shape of an internally spherical zone 14, and the other one of said portions, in the drawings the second portion 20, has an end 21 in the shape of a mating externally spherical zone 24. Even though in the drawings, the internally spherical zone 14 is shown as provided on the first portion 10, and the externally spherical zone 24 is shown as provided on the second portion 20 of the second tube member, it is quite possible, if desired, to make it the other way round.

In accordance with the present invention, the internally spherical zone 14 provided in one of the portions 10 and 20 is cup-shaped and diverges toward an opening, which faces the externally spherical zone 24 of the other portion to permit entry of the externally spherical zone 24 of said other portion into surface contact between the two zones 14, 24. Further, the externally spherical zone 24 of said end has two diametrically opposed stub shafts 25 arranged to form a hinge axis for the other portion 20 in a hinge joint, and clamping means 30 are provided for maintaining the two spherical zones 14, 24 clamped against each other.

In the embodiment shown in Figs. 5 and 6, the tubular first portion 10 has one end designed for insertion of a pipe, not shown, which has a beveled end that is intended to abut against an internal mating beveled surface provided inside the tubular first portion 10. At said one end, the tubular first portion 10 is provided with a circumferential internal groove for housing a seal ring, not shown, for sealing against the exterior surface of the pipe inserted in the tubular first portion 10 of the fitting. The internal mating beveled surface and the circumferential internal groove are designed and located as the corresponding surface and groove in the fitting of Figs. 1-4. Further, the tubular second portion 20 is shown as having a beveled free end 3 for connection to some other component, not shown, in an indoor sewer system. Of course, if desired, the fitting may be designed for other types of connection to other components of the sewer system, e.g. threaded connections or connections to be welded or glued, and the size of the inlets and/or outlets of the fitting may all be alike or differ from one another.

For making the fitting leak-proof, the socket 11 suitably has a rim 12 with a seat 13 for an internal seal ring for sealing against the externally spherical zone 24. In the embodiment shown in Figs. 5 and 6, the seat 13 is defined by an annular bottom wall and an outer cylindrical wall, but it can be of any desired shape. The clamping means include a snap action ring 30, which interconnects the first portion 10 and the second portion 20 circumferentially. In the shown embodiment, the snap action ring 30 has four radially inwards projecting equiangularly spaced hook members 31, three of which (31, 31', and 31 ") are shown in the drawings, for gripping against the reverse side of the rim 12. Of course, if desired, another number of hook members may be chosen. An elastic seal ring 35 is provided in said seat 13 for preventing leakage of fluid through the hinge joint, and the snap action ring 30 compresses said seal ring 35 axially.

Like in the embodiment shown in Fig. 4, each stub shaft 25 has a cylindrically curved first surface 26, and the snap action ring 30 has two correspondingly curved recesses 32, 32' for receiving the cylindrically curved first surface 26 of each stub shaft 25, and two of the hook members 31 preferably are placed opposite the recesses 32. Further, each stub shaft 25 also has an opposed surface 27, and the snap action ring 30 presses the opposed surface 27 of each of the stub shafts 25 against an axial side of the elastic seal ring 35. In the embodiment shown in Fig. 5, the opposed surface 27 is formed by a central concave cylindrically curved surface and outside thereof two intersecting planes. The combination of the stub shafts 25, the snap action ring 30 and the elastic seal 35 effectively contributes to the holding together of the components of the fitting. The stub shafts 25 make the universal pivotal joint into a hinge joint and, consequently, restrict the pivotal movement of the second portion 20 of the second tube member to a single plane. However, by rotating the snap action ring 30 and the externally spherical zone 24 with its two stub shafts 25, it is possible to select any desired position for the pivotal movement plane.

Fig. 6 shows the pivotal fitting with the tubular second portion 20 pivoted to each one of two end positions. The spherical zone 14 of the first portion 10 is arranged at an angle to a longitudinal axis of the first portion 10, and to agree with marketed fixed angle fittings, it is also recommendable the said angle is suitably selected from the group consisting of 0°, 20°-22.5°, 45°, 67.5°-70° and 87.5°-90°. In Fig. 6, the angel is on the order of 20°-22.5°, and it is easy to realize that the shown fitting may be substituted for an elbow of any angle between 45° and 90°. By selecting another basic range for the angle, the "elbow angle" at one of the end positions may be larger than 90° or even 0°, if desired. Thus, with a basic angle of 90° between the spherical zone 14 and the longitudinal axis of the tubular first portion 10, the longitudinal axis of the tubular second portion 20 may be coaxial with that of the first portion 10, if desired. If the basic angle is reduced to a range on the order of 67.5°-70°, the two longitudinal axes may still be parallel, if desired, but they are displaced laterally relative to each other. Consequently, a comparatively small number of pivotal fittings can be substituted for a greater number of straight or fixed angle elbow fittings.

The invention is not limited by the above described embodiments but the skilled person realizes that a great variety is possible within the scope of the appended claims, achieving a similar functionality. For instance, it is evident; that the shape of the mating surfaces stub shaft/recess may vary substantially to enable the desired pivotal movement and, that different materials may be used, e.g. having the retaining ring in metal, and the one or more of the others in polymer, etc.

## Claims

1. Apivotal fitting for indoor sewer systems to interconnect at least two pipe sections or tubing sections, said fitting having a first tubular portion (10) and a second tubular portion (20) that is pivotally attached to said first portion (10), one of said portions having a wall (11) defining a socket in the shape of an internally spherical zone (14), and the other one of said portions having an end (21) in the shape of a mating externally spherical zone (24), wherein the internally spherical zone (14) provided in one of the portions (10) is cup-shaped and diverges toward an opening facing the externally spherical zone (24) of the other portion (20) to permit entry of the externally spherical zone (24) into surface contact between the two zones (14, 24), said externally spherical zone (24) of said end (21) having two diametrically opposed stub shafts (25) arranged to form a hinge axis for said other portion (20) in a hinge joint, and clamping means (30) being provided for maintaining the two spherical zones (14, 24) clamped against each other, and wherein the socket (11) has a rim (12) with a seat (13) for an internal seal ring (35) for sealing against the externally spherical zone (24), said clamping means including a ring (30), circumferentially interconnecting the first portion (10) and the second portion (20), a seal ring (35) being provided in said seat (13) for preventing leakage of fluid through the hinge joint, said ring (30) compressing said seal ring (13) axially, **characterized in that** said stub shafts (25) have a shaped, first surface (26), the ring (30) having two matingly shaped recesses (32, 32') arranged to receive said shaped first surfaces (26), to enable pivotal movement, and said stub shafts (25) further having an opposed surface (27), the ring (30) pressing the opposed surface (27) of the stub shafts (25) against an axial side of the seal ring (13).

2. A fitting as claimed in claim 1, **characterized in that** said ring (30) is a snap action ring.

3. A fitting as claimed in claim 1 or 2, **characterized in that** said shaped first surface (26) is cylindrically curved, wherein preferably said opposed surface (27) is plane.

4. A fitting as claimed in any one of claims 1-3, **characterized in that** the hinge joint is configured to permit a pivotal movement on the order of at least 30°, preferably about 45°.

5. A fitting as claimed in claim 4, **characterized in that** the second portion (20) is pivotal an angle on the order of ± 22,5° from a longitudinal axis of the spherical zone (14 or 24) of the first portion (10).

6. A fitting as claimed in any one of claims 1-5, **characterized in that** the spherical zone (14 or 24) of the first portion (10) is arranged at an angle to a longitudinal axis of the first portion (10), said angle being selected from the group consisting of 0°, 20°-22.5°, 45°, 67.5°-70° and 87.5°-90°.

7. A fitting as claimed in any one of claims 1-6, **characterized in that** the first portion (10) forms a beginning of an integral branch (2) of a branched fitting having at least two branches (1 and 2) for interconnecting at least three pipe sections or tubing sections.

8. A fitting as claimed in claim 7, **characterized in that** the branched fitting comprises a first tube member (1) and a second tube member (2), said first and second tubular portions (10, 20) together forming the second tube member (2),

9. A fitting as claimed in claim 8, **characterized in that** a longitudinal axis of the first portion (10) forms an angle with a longitudinal axis of the first tube member (1) of said branched fitting, said angle being selected from the group consisting of 20°-22.5°, 45°, 67.5°-70° and 87.5°-90°.

10. A fitting as claimed in claim 9, characterized i n that a distance between the first tube member (1) and the wall (11) defining the socket is arranged to be short in relation to the length of the first tube member, preferably sufficiently short to merely allow for ergonomical fitting of said ring (30).

11. A fitting as claimed in any one of claims 1-10, **characterized in that** it is an all-plastic fitting.

12. Method for producing a fitting as defined in any of claims 1-11, **characterized** b y using form molding to produce said portion provided with an internal spherical zone (14) that is cup-shaped and diverges towards the opening of the spherical zone (14).

## Patentansprüche

1. Schwenkfitting für ein Innenraum-Abwassersystem, um mindestens zwei Leitungsteile oder Rohrteile zu verbinden,
wobei der Fitting einen ersten rohrförmigen Abschnitt (10) und einen zweiten rohrförmigen Abschnitt (20) aufweist, der schwenkbar an dem ersten Abschnitt (10) angebracht ist, wobei einer der Abschnitte eine Wand (11) aufweist, die eine Pfanne in Form einer Zone (14), die innen kugelförmig ist, definiert und der andere der Abschnitte ein Ende (21) in Gestalt einer zusammenpassenden Zone (24) aufweist, die außen kugelförmig ist,
wobei die Zone (14), die innen kugelförmig ist, die in einem der Abschnitte (10) bereitgestellt ist, napfförmig ist und in Richtung einer Öffnung auseinander läuft, die der Zone (24) des anderen Abschnitts (20), die außen kugelförmig ist, gegenüber liegt, um ein Eintreten der Zone (24), die außen kugelförmig ist, in einen Oberflächenkontakt zwischen den zwei Zonen (14, 24) zu gestatten,
wobei die Zone (24) des Endes (21), die außen kugelförmig ist, zwei genau entgegengesetzte Achsstümpfe (25) aufweist, die angeordnet sind, um für den anderen Abschnitt (20) eine Gelenkachse in einer Gelenkverbindung zu bilden, und Klemmmittel (30) aufweist, die bereitgestellt sind, um die beiden kugelförmigen Zonen (14, 24) gegeneinander geklemmt zu halten, und
wobei die Pfanne (11) einen Rand (12) mit einem Sitz (13) für einen inneren Dichtungsring (35) aufweist, um gegenüber der Zone (24), die außen kugelförmig ist, abzudichten,
wobei die Klemmmittel einen Ring (30), der den ersten Abschnitt (10) und den zweiten Abschnitt (20) in Umfangsrichtung miteinander verbindet, aufweisen; wobei ein Dichtungsring (35) in dem Sitz (13) bereitgestellt ist, um eine Leckage von Flüssigkeit durch die Gelenkverbindung zu verhindern, wobei der Ring (30) den Dichtungsring (13) axial zusammendrückt,
**dadurch gekennzeichnet, dass**
die Achsstümpfe (25) eine geformte erste Oberfläche (26) aufweisen, der Ring (30) zwei zusammenpassend geformte Aussparungen (32, 32') aufweist, die angeordnet sind, um die geformten ersten Oberflächen (26) aufzunehmen, um eine Schwenkbewegung zu ermöglichen, und
wobei die Achsstümpfe (25) weiter eine entgegengesetzte Oberfläche (27) aufweisen, wobei der Ring (30) die gegenüberliegende Oberfläche (27) der Achsstümpfe (25) gegen eine axiale Seite des Dichtungsrings (13) presst.

2. Fitting gemäß Anspruch 1, **dadurch gekennzeichnet, dass** der Ring (30) ein Schnappverbindungsring ist.

3. Fitting gemäß Anspruch 1 oder 2, **dadurch gekennzeichnet, dass** die geformte erste Oberfläche (26) zylindrisch gekrümmt ist, wobei die entgegengesetzte Oberfläche (27) bevorzugt eben ist.

4. Fitting gemäß einem der Ansprüche 1-3, **dadurch gekennzeichnet, dass** die Gelenkverbindung konfiguriert ist, eine Schwenkbewegung in der Größenordnung von mindestens 30°, vorzugsweise von etwa 45° zu erlauben.

5. Fitting gemäß Anspruch 4, **dadurch gekennzeichnet, dass** der zweite Abschnitt (20) in einem Winkel in der Größenordnung von ±22,5° von einer Längsachse der kugelförmigen Zone (14 oder 24) des ersten Abschnitts (10) schwenkbar ist.

6. Fitting gemäß einem der Ansprüche 1-5, **dadurch gekennzeichnet, dass** die kugelförmige Zone (14 oder 24) des ersten Abschnitts (10) mit einem Winkel zu einer Längsachse des ersten Abschnitts (10) angeordnet ist, wobei der Winkel ausgewählt ist aus der Gruppe bestehend von 0°, 20°-22,5°, 45°, 67,5°-70° und 87,5°-90°.

7. Fitting gemäß einem der Ansprüche 1-6, **dadurch gekennzeichnet, dass** der erste Abschnitt (10) ein Anfang einer integralen Abzweigung (2) eines verzweigten Fittings mit mindestens zwei Zweigen (1 und 2) bildet, um mindestens drei Leitungsabschnitte oder Rohrabschnitte zu verbinden.

8. Fitting gemäß Anspruch 7, **dadurch gekennzeichnet, dass** der verzweigte Fitting ein erstes Rohrelement (1) und ein zweites Rohrelement (2) umfasst, wobei der erste und zweite rohrförmige Abschnitt (10, 20) zusammen das zweite Rohrelement (2) bilden.

9. Fitting gemäß Anspruch 8, **dadurch gekennzeichnet, dass** eine Längsachse des ersten Abschnitts (10) einen Winkel mit der Längsachse des ersten Rohrelements (1) des verzweigten Fittings bildet, wobei der Winkel ausgewählt ist von der Gruppe bestehend aus 20°-22,5°, 45°, 67.5°-70° und 87,5°-90°.

10. Fitting gemäß Anspruch 9, **dadurch gekennzeichnet, dass** ein Abstand zwischen dem ersten Rohrelement (1) und der Wand (11), die die Pfanne definiert, eingerichtet ist, in Bezug auf die Länge des ersten Rohrelements kurz zu sein, bevorzugt ausreichend kurz, um gerade ein ergonomisches Einpassen des Rings (30) zu gestatten.

11. Fitting gemäß einem der Ansprüche 1-10, **dadurch gekennzeichnet, dass** es ein Voll-Kunststoff-Fitting ist.

12. Verfahren zum Herstellen eines Fittings gemäß einem der Ansprüche 1 bis 11, **gekennzeichnet durch** Verwendung eines Formverfahrens mit einer Form, um den Abschnitt herzustellen, der mit einer kugelförmigen Zone (14) versehen ist, die napfförmig ist und in Richtung der Öffnung der kugelförmigen Zone (14) auseinanderläuft.

## Revendications

1. Un raccord pivotant pour des systèmes d'égout intérieurs destiné à interconnecter au moins deux portions de conduit ou plusieurs portions de tube, ledit raccord comportant une première partie tubulaire (10) et une deuxième partie tubulaire (20) qui est reliée de façon pivotante à ladite première partie (10), l'une desdites parties ayant une paroi (11) définissant une portion réceptrice ayant la forme d'une zone sphérique interne (14), et l'autre desdites parties ayant une extrémité (21) en forme de zone sphérique externe (24) coopérante, la zone sphérique interne (14) aménagée dans l'une des parties (10) est en forme de coupelle et diverge en direction d'une ouverture tournée vers la zone sphérique externe (24) de l'autre partie (20) pour permettre l'entrée de la zone sphérique externe (24) selon un contact de surface entre les deux zones (14, 24), ladite zone sphérique externe (24) de ladite extrémité (21) possédant deux moignons d'arbre (25) diamétralement opposés agencés pour former un axe d'articulation pour ladite autre partie (20) dans une articulation à charnière, des moyens de serrage (30) étant prévus pour maintenir les deux zones sphériques (14, 24) serrées l'une contre l'autre, et la portion réceptrice (11) comporte un rebord (12) avec un siège (13) pour une bague d'étanchéité interne (35) venant en relation d'étanchéité avec la zone sphérique externe (24), lesdits moyens de serrage comprenant une bague (30), interconnectant de manière circonférentielle la première partie (10) et la deuxième partie (20), une bague d'étanchéité (35) étant prévue dans ledit siège (13) pour empêcher une fuite de fluide à travers l'articulation de la charnière, ladite bague (30) comprimant ladite bague d'étanchéité (13) axialement, **caractérisé en ce que** lesdits moignons d'arbre (25) ont une première surface profilée (26), la bague (30) ayant deux évidements (32, 32') de forme correspondante agencés pour recevoir lesdites premières surfaces (26) profilées, pour permettre un mouvement de pivotement, et lesdits moignons d'arbre (25) ayant en outre une surface opposée (27), la bague (30) appuyant contre la surface opposée (27) des moignons d'arbre (25) contre un côte axial de la bague d'étanchéité (13).

2. Un raccord selon la revendication 1, **caractérisé en ce que** ladite bague (30) est une bague à encliquetage.

3. Un raccord selon la revendication 1 ou la revendication 2, **caractérisé en ce que** ladite première surface profilée (26) est à courbure cylindrique, ladite surface opposée (27) étant de préférence plane.

4. Un raccord selon l'une quelconque des revendications 1 à 3, **caractérisé en ce que** l'articulation à charnière est configurée pour permettre un mouvement de picotement de l'ordre d'au moins 30°, de préférence d'environ 45°.

5. Un raccord selon la revendication 4, **caractérisé en ce que** la deuxième partie (20) peut pivoter selon un angle de l'ordre de ± 22,5° par rapport un axe longitudinal de la zone sphérique (14 ou 24) de la première partie (10).

6. Un raccord selon l'une quelconque des revendications 1 à 5, **caractérisé en ce que** la zone sphérique (14 ou 24) de la première partie (10) est agencée selon un angle par rapport un axe longitudinal de la première partie (10), ledit angle étant choisi dans le groupe constitué de 0°, 20° à 22,5°, 45°, 67,5° à 70°, et 87,5° à 90°.

7. Un raccord selon l'une quelconque des revendications 1 à 6, **caractérisé en ce que** la première partie (10) forme le début d'une branche (2) faisant partie intégrante d'un raccord ramifié ayant au moins deux branches (1 et 2) pour interconnecter au moins trois portions de conduit ou plusieurs portions de tube.

8. Un raccord selon la revendication 7, **caractérisé en ce que** le raccord ramifié comprend un premier élément de tube (1) et un deuxième élément de tube (2), lesdites première et deuxième parties tubulaires (10, 20) formant ensemble le deuxième élément de tube (2).

9. Un raccord selon la revendication 8, **caractérisé en ce qu'**un axe longitudinal de la première partie (10) forme un angle avec un axe longitudinal du premier élément de tube (1) dudit raccord ramifié, ledit angle étant choisi dans le groupe constitué de 20° 22,5°, 45°, 67,5° à 70°, et 87,5° à 90°.

10. Un raccord selon la revendication 9, **caractérisé en ce qu'**une distance entre le premier élément de tube (1) et la paroi (11) définissant la portion réceptrice est agencée de manière à être courte par rapport à la longueur du premier élément de tube, de préférence suffisamment courte pour permettre simplement le montage ergonomique de ladite bague (30).

11. Un raccord selon l'une quelconque des revendications 1 à 10, **caractérisé en ce qu'**il s'agit d'un raccord tout en plastique.

12. Procédé de fabrication d'un raccord tel que défini dans l'une quelconque des revendications 1 à 11, **caractérisé par** l'utilisation d'un moulage de forme pour produire ladite portion pourvue d'une zone sphérique interne (14) qui est en forme de coupelle et diverge vers l'ouverture de la zone sphérique (14).
